# EUROPÄISCHE PATENTSCHRIFT

(11) **EP 4 460 435 B1**
(45) Veröffentlichungstag und Bekanntmachung des Hinweises auf die Patenterteilung: **26.11.2025**
(21) Anmeldenummer: 23704266.8
(22) Anmeldetag: 31.01.2023
(51) Int. Cl.: B60L 50/64, B60L 50/60, H01M 10/0525, H01M 10/615, H01M 10/625, H01M 10/653, H01M 10/6562, H01M 10/658, H01M 50/207, H01M 50/224, H01M 50/236, H01M 50/249, H01M 50/26, H01M 50/276, H01M 50/333, H01M 50/342, H01M 50/358, H01M 50/383, B60K 1/04

(54) **BATTERIESYSTEMGERÜST UND VERFAHREN ZUR AUFNAHME VON MINDESTENS EINEM ERSTEN UND MINDESTENS EINEM BENACHBARTEN ZWEITEN BATTERIEMODUL IN EINEM FAHRZEUG ZUR BILDUNG EINES BATTERIESYSTEMS**
BATTERY SYSTEM RACK AND METHOD FOR ACCOMMODATING AT LEAST ONE FIRST AND AT LEAST ONE ADJACENT SECOND BATTERY MODULE IN A VEHICLE IN ORDER TO FORM A BATTERY SYSTEM
STRUCTURE DE SYSTÈME DE BATTERIE ET PROCÉDÉ DE RÉCEPTION D'AU MOINS UN PREMIER ET D'AU MOINS UN DEUXIÈME MODULE DE BATTERIE VOISIN DANS UN VÉHICULE DE MANIÈRE À FORMER UN SYSTÈME DE BATTERIE

(30) Priorität: 25.02.2022 DE 102022201950
(43) Veröffentlichungstag der Anmeldung: 13.11.2024
(73) Patentinhaber: Siemens Mobility GmbH, 80997 München (DE)
(72) Erfinder: DITTRICH, Maik, 91052 Erlangen (DE); COMMES, Matthias, 82131 Gauting (DE); WEIGEL, Tim, 80992 München (DE)
(74) Vertreter: Siemens Patent Attorneys
(86) Internationale Anmeldenummer: PCT/EP2023/052271
(87) Internationale Veröffentlichungsnummer: WO 2023/160964

(56) Entgegenhaltungen:
- WO-A1-2015/158042
- JP-A- 2017 098 014
- US-A1- 2007 144 804
- US-A1- 2019 020 080

## Beschreibung

Die Erfindung betrifft ein Batteriesystemgerüst zur Aufnahme von mindestens einem ersten und mindestens einem benachbarten zweiten Batteriemodul in einem Fahrzeug zur Bildung eines Batteriesystems gemäß dem Oberbegriff des Anspruchs 1, und ein Verfahren zur Aufnahme von mindestens einem ersten und mindestens einem benachbarten zweiten Batteriemodul in einem Fahrzeug zur Bildung eines Batteriesystems gemäß dem Oberbegriff des Anspruchs 11.

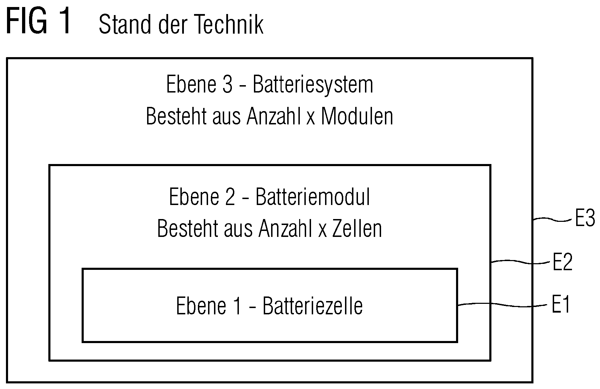

Batteriesysteme, die auf Lithium-Ionen Batteriezellen beruhen, sind bekannt. Beispielsweise kommen solche Systeme auch in Schienenfahrzeugen für deren Traktions- und Bordnetzanwendungen zum Einsatz. Ein typisches Lithium-Ionen Batteriesystem für Traktions- und Bordnetzanwendungen lässt sich dabei, insbesondere für die Definition von Sicherheitsanforderungen, schematisch wie in FIGUR 1 abgebildet darstellen.

Demgemäß kann man bei einem für den genannten Zweck eingesetzten Batteriesystem drei Ebenen unterscheiden. Eine erste Ebene E1 ist dabei durch eine Batteriezelle gebildet. Aus einer Anzahl solcher Zellen wird wiederrum ein Batteriemodul gebildet. Dies kann als zweite Ebene E2 aufgefasst werden. Das Batteriesystem und somit letztendlich die dritte Ebene E3 wird in der Regel durch mehrere Batteriemodule gebildet.

Bei Lithium-Ionen Batteriezellen besteht grundsätzlich die Gefahr, dass diese durch einen internen Kurzschluss in Brand geraten. Diese Reaktion ist stark exotherm und wird als so genanntes Thermal-Runaway (TRA) bezeichnet.

Bei einer derartigen Reaktion, wird ein Vielfaches der elektrisch gespeicherten Energie in Wärme umgesetzt. Ursachen für den internen Kurzschluss können beispielsweise Fehler in der Produktion der Zelle sein, wie beispielsweise Fremdpartikel.

Ein TRA ist - soweit es nicht beispielsweise durch menschliches Fehlverhalten ausgelöst wurde - ein in der Regel also dem Zufall unterliegendes Ereignis in einer Zelle, das jederzeit, spontan sowohl während des Betriebes als auch während einer Lagerung, auftreten kann. Die Ursachen für ein TRA sind dabei beispielsweise bereits durch die Fertigung in den Zellen angelegt. Ein TRA kann also nicht ausgeschlossen bzw. verhindert werden, daher ist, insbesondere bei so großen Systemen wie sie bei Schienenfahrzeugen zum Einsatz kommen, ein Sicherheitskonzept erforderlich, welches die Verkehrssicherheit gewährleistet.

Um die Sicherheit des Batteriesystems nachzuweisen, wird daher in der Norm EN 62619 der sog. Thermal Propagation Test (TPT) gefordert. Hierbei ist nachzuweisen, dass es nach dem internen Kurzschluss einer einzelnen Zelle wahlweise zu keinem Brand auf Zellebene (erster Ebene E1), auf Modulebene (zweite Ebene E2) oder zu keinem Brand auf Batteriesystemebene kommt (dritter Ebene E3).

Bekannte Konzepte, die dies gewährleisten, bestehen beispielsweise darin einen TRA beständigen Container für das gesamtes Batteriesystem. Diese Lösung ist aber, nicht zuletzt, weil der Container mit einem schweren Außengehäuse versehen wird, teuer.

Ein weiterer Ansatz besteht darin sicherere Zellen zu nutzen. Also Lithium-Ionen Zellen zu nutzen, die derart aufgebaut sind, dass sie eine verringerte TRA Energie aufweisen und/oder mit zelleninternen Schutzmechanismen ausgestattet sind. Auch dieser Ansatz führt zu hohen Kosten.

Ein weiteres Konzept besteht darin, brandhemmende Barrieren, wie beispielsweise Phasen-Wechsel-Materialien, zwischen einzelnen Zellen innerhalb eines Moduls vorzusehen. Allerdings überzeugt dieses Konzept hinsichtlich der Zuverlässigkeit seiner Funktion nicht, wogegen der Ansatz, dauerhaft aktives Zuführen von Kühlwasser in das System mittels elektrisch betriebener Wasserpumpen zur Kühlung des Systems vorzusehen, bei Betrieb des einsetzenden Fahrzeugs eine hohe Zuverlässigkeit aufweist. Nachteilig hierbei ist aber, dass diese Funktion wohl nicht gewährleistet werden kann, während das Fahrzeug abgerüstet ist.

Die in der US 2007/144804 A1 offenbarte Lösung zielt auf Ansätze zur Verlängerung der Batterielebensdauer ab, wie beispielsweise das Aufrechterhalten der Batteriezelltemperaturen in Batteriepacks innerhalb festgelegter Grenzwerte, die Bereitstellung von Vibrations- und Stoßfestigkeit und/oder die elektrische Isolierung von Batteriegruppen von nahegelegenen leitfähigen Oberflächen.

Die der Erfindung zugrundeliegende Aufgabe ist es daher, eine Lösung anzugeben, die die Nachteile des Standes der Technik überwindet, insbesondere liegt die technische Aufgabe darin, eine Lösung anzugeben, die es ermöglicht Lithium-Ionen Zellen im Wesentlichen ohne Einschränkungen der Ausgestaltung der Zellen, in Fahrzeugen, vorzugsweise in Schienenfahrzeugen, zu nutzen.

Die Aufgabe wird erfindungsgemäß durch das Batteriesystemgerüst gemäß Oberbegriff des Anspruchs 1 durch dessen kennzeichnende Merkmale gelöst, sowie durch das Verfahren gemäß dem Oberbegriff des Anspruchs 11, durch dessen kennzeichnende Merkmale gelöst.

Bei dem erfindungsgemäßen Batteriesystemgerüst zur Aufnahme von mindestens einem ersten und mindestens einem benachbarten zweiten Batteriemodul in einem Fahrzeug zur Bildung eines Batteriesystems, vorzugsweise in einem Maschinenraum des Fahrzeugs, insbesondere eines Schienenfahrzeugs,
a) ist das erste Batteriemodul und zweite Batteriemodul aus mehreren, insbesondere Lithium-Ionen, Batteriezellen gebildet,
b) ist zumindest das erste Batteriemodul, in einer separaten, insbesondere aus vier einzelnen Seitenteilen rechteckig gebildeten, Röhre angeordnet,
c) ist die Röhre aus einem brandfesten, Material gebildet,
d) weist die Röhre eine in einer Röhrenseite ausgebildete und/oder einem der Röhrenenden, insbesondere innerhalb eines Verschlusses, ausgebildete Öffnung zur Bereitstellung einer Drucksicherung auf,
e) umfasst die Röhre eine brandfeste Schnittstelle für den Anschluss und Betrieb des Batteriemoduls im Batteriesystem,
f) ist die Röhre derart ausgestaltet, dass an jeder Öffnung eine Drucksicherung und eine brandfeste Abluftvorrichtung, insbesondere ein Kamin, angebracht ist, so dass seitens der Drucksicherung emittierte Gase vermittelt durch die Abluftvorrichtung kontrolliert abgeführt werden können,
g) ist die Röhre, die Schnittstelle und/oder die Drucksicherung derart ausgestaltet und/oder angeordnet, dass das Batteriemodul durch die Röhre, die Schnittstelle und/oder die Drucksicherung zumindest temporär hermetisch abgeschlossen ist,
h) sind zwei Blechrahmen derart ausgestaltet, dass sie zur Aufnahme der Röhren an Stirn- und Rückseite gemäß dem Röhrenquerschnitt geformte Ausschnitte aufweisen, deren Ränder mit den Röhren R_{1...n} verbunden sind,
i) sind die Blechrahmen zur Aufnahme der Batteriemodule derart ausgestaltet, dass zwischen Röhre eines Batteriemoduls und, insbesondere den benachbarten Batteriemodulen durch Wärmeübertragung verbundenen, angrenzenden Flächen, eine Vielzahl von Luftspalten derart gebildet werden, die derart verbunden und ausgestaltet sind, dass sie eine Struktur bilden, die seitens jeweiligem Batteriemodul abgegebene Wärme durch einen Kamineffekt kontrolliert ableiten, wobei die Ausschnitte und Öffnungen derart angeordnet sind, dass die Abluftvorrichtung, insbesondere zwischen zwei Röhren, an diese angeschlossen ist,
j) sind die Blechrahmen zur Montage des Batteriesystems zumindest temporär mit einem Grundrahmen verbindbar ausgestaltet,
k) ist jeweils ein erster Verschluss an die Stirnseite der Röhren angebracht und jeweils ein zweiter Verschluss an der Rückseite der Röhren, derart angebracht, dass für im Inneren der Röhren entstehenden Gase dicht ist,
l) ist zumindest die Röhre mit den Blechrahmen und/oder der Abluftvorrichtung zumindest teilweise auf Verschweißungen beruhend verbunden.

Durch das erfindungsgemäße Batteriesystemgerüst wird sowohl ein Brandschutz des das Gerüst beinhaltenden und das damit erfindungsgemäß gebildeten Batteriesystems sowie im Fahrzeug oder unter Umständen auch im nahen Umfeld des Fahrzeugs befindliche Personen vor Bränden und deren Auswirkungen geschützt. Dies wird unter erfindungsgemäß dadurch bewirkt, dass ein etwaiger von einer Batteriezelle verursachter Brand durch das brandfeste, also mindestens hochtemperaturfeste Material, durch die Röhre auf das diese Zelle beinhaltende Batteriemodul begrenzt wird.

Durch geeignete Dimensionierung und Ausgestaltung dieses Systems, beispielsweise durch Redundanzen, kann somit zudem sogar die Funktion des Batteriesystems für das Fahrzeug nicht oder nur unwesentlich beeinträchtigt werden.

Auch die Behebung des Schadens, also im Wesentlichen, der Austausch des betroffenen Batteriemoduls, wird durch die Erfindung erleichtert, da das Batteriemodul nach Abnahme eines Verschlusses und etwaigen Sanierungen im Inneren ausgetauscht werden kann, und bietet Schutz für das Wartungspersonal, da diese erfindungsgemäßen Wirkungen in jedem Betriebszustand des Batteriesystems bzw. des Fahrzeugs gegeben sind.

Diese Schutzfunktion ist unter anderem durch die thermische Isolation/Abschottung der Batteriemodule untereinander aber auch durch die Ausgestaltung der Elemente des Batteriesystemgerüsts also den mit dem Gerüst verschweißten Röhren und/oder Abluftvorrichtung gegeben. Die durch die aufeinander abgestimmte Ausgestaltung dieser Elemente gewährleistet zudem gemäß Erfindung, dass Wärme im System zügig abgeführt wird.

Das ist sowohl im Normalbetrieb vorteilhaft als auch im Brandfall von Vorteil, da gewünschte Temperaturen im Normalbetrieb eingehalten werden können, was unter anderem auch abnorme Zustände von Zellen reduzieren kann, und im Brandfall das schädliche Einwirken auf weitere Batteriemodule verhindert.

Dies wird noch durch die Wärmedämmung innerhalb der Röhren verstärkt. Dieses bietet einen weiteren Freiheitsgrad zur Einstellung des Maßes einer zum umschlossenen Modul gelangenden Wärmeenergie bzw. Wärmeleistung/Wärmfluss. Ein weiterer Freiheitsgrad kann insbesondere durch die Wahl der Eigenschaften der Röhren derart bereitgestellt werden, dass das Gehäuse nur in einer Richtung für Wärme durchlässig ist bzw. in dieser Richtung, einen stärkeren Durchlass hat, nämlich nach außen. Bei so einer Ausgestaltung wirkt die Röhre derart mit der Wärmedämmung zusammen, dass die Wärmedämmung zu einer dosierten Wärmeabgabe führt und die Temperatur der Röhre auf seiner Außenseite so auf einem niedrigen Temperaturniveau gehalten wird. Die Wärmeenergie wird über die Außenflächen der Hülle dosiert über einen längeren Zeitraum abgegeben und stellt so die Kühlung des Systems dar, ohne die Nachbarmodule übermäßig thermisch zu belasten. Gleichzeitig bewirkt die Isolierung der Nachbarmodule nochmals deren thermische Abschottung. Deren Dämmstoff ist auf einem niedrigen Temperaturniveau als das vom einem TRA Ereignis betroffene. Der Durchgangswert eines kalten Dämmstoffes ist in der Regel deutlich besser als der eines heißen, somit ist die Isolierwirkung an den Nachbarmodulen, die eine Minimierung des Wärmeflusses bewirkt, höher als die Isolierwirkung einem von einem TRA Ereignis betroffenen Modul (Ziel: reduzierter Wärmefluss).

Im Brandfall kommt auch die Funktion der Drucksicherung zum Tragen, denn bei einem Brand ist mit einer Druckerhöhung im Inneren des Gehäuses zu rechnen, die auf die strukturelle Stabilität des Gehäuses wirkt und es zerstören kann. Mit einer geeigneten Dimensionierung der Drucksicherung wird erfindungsgemäß sichergestellt, dass bei bzw. vor einem Erreichen eines zerstörerischen Drucks das für den Druck verantwortliche Gas entweichen kann.

In Verbindung mit der Abluftvorrichtung stellt man ein kontrolliertes frei konvektives Entweichen des Gases derart sicher, dass auch andere Elemente des Batteriesystems nicht zerstörerisch beeinträchtigt werden, und die Abgase kontrolliert ins Freie abgeleitet werden können. Das Anbringen der Abluftvorrichtung an die Öffnungen stellt dabei sicher das die Abluftvorrichtung sowie die anderen Gerüstelemente die Funktion zumindest teilweise schadlos überstehen und somit zumindest Teile der Anordnung auch nach einem derartigen Vorfall zur Verfügung steht.

Insbesondere ist die Abluftvorrichtung sowie insbesondere alle anderen außerhalb der Röhren angeschlossenen bzw. anschließbaren Elemente auch noch zusätzlich brandfest ausgestaltet.

Die Erfindung ist dabei so flexibel, dass Batteriemodule grundsätzlich durch alle Arten von Batteriezellen gebildet werden können, bei denen ein Brand oder andere auf Nachbarmodule übergreifende zerstörerische Ereignisse nicht vollständig ausgeschlossen werden können.

Wird das Batteriesystem homogen, also vollständig durch solche Batteriemodule bestückt, können alle Batteriemodule in einer erfindungsgemäßen Röhre umhüllt in das Gerüst zur Bildung des Batteriesystemgerüstes aufgenommen werden. Dazu wird das jeweilige Modul in die mit dem Gerüst verschweißte Röhre eingeschoben.

Handelt es sich um ein heterogenes System, bei denen auch Batteriemodule enthalten sind, bei denen ein zerstörerisches Ereignis der genannten Eigenschaften ausgeschlossen werden kann oder deren Wahrscheinlichkeit für ein zerstörerisches Ereignis oder zerstörerischer Energie derart gering sind, dass auf einen zusätzlichen Schutz verzichtet werden kann, ist es auch denkbar, dass nur die unsicheren Batteriemodule, also jene deren Wahrscheinlichkeit für zerstörerische Energie, insbesondere Brand, größer ist, in eine Röhre eingekapselt in dem Gerüst austauschbar eingeführt werden.

Der beste Schutz wird dabei natürlich erreicht, wenn alle Batteriemodule in einer erfindungsgemäßen mit dem Gerüst, insbesondere zumindest teilweise auf Verschweißung beruhend, verbundenen Röhre gebracht werden. Also die Röhre beispielsweise verschweißt oder optional mittels an die Röhre geschweißter Flansche mit dem Blechrahmen, beispielsweise durch Schweißen, Nieten, Schrauben, Klemmen, Kleben und/oder ähnliche Verbindungen, gefügt wird.

Die Erfindung ermöglicht es also zumindest teilweise unsichere Batteriemodule, die beispielsweise zumindest zum Teil durch Lithium-Ionen Zellen gebildet werden, einzusetzen und in ein Batteriesystem eines Fahrzeugs zu integrieren. Hierdurch wird der Einsatz kostengünstiger und/oder höhere Energiedichte aufweisender Batteriezellen möglich.

Bei dem erfindungsgemäßen Verfahren zur Aufnahme von mindestens einem ersten und mindestens einem benachbarten zweiten Batteriemodul in einem Fahrzeug zur Bildung eines Batteriesystems, vorzugsweise in einem Maschinenraum des Fahrzeugs, insbesondere eines Schienenfahrzeugs,
a) werden das erste Batteriemodul und zweite Batteriemodul aus mehreren, insbesondere Lithium-Ionen, Batteriezellen gebildet und betrieben,
b) wird zumindest das erste Batteriemodul, in einer separaten, insbesondere aus vier einzelnen Seitenteilen rechteckig gebildeten, Röhre angeordnet und betrieben,
c) wird die Röhre aus einem brandfesten Material gebildet und betrieben,
d) umfasst die Röhre eine in einer Röhrenseite und/oder einem der Röhrenenden, insbesondere innerhalb eines Verschlusses, ausgebildete Öffnung zur Bereitstellung einer Drucksicherung,
e) umfasst die Röhre eine brandfeste Schnittstelle für den Anschluss und Betrieb des Batteriemoduls im Batteriesystem,
f) wird die Röhre derart ausgestaltet und betrieben, dass an jeder Öffnung eine Drucksicherung und eine brandfeste Abluftvorrichtung, insbesondere ein Kamin, angebracht ist, so dass seitens der Drucksicherung emittierte Gase vermittelt durch den Abgaskamin kontrolliert abgeführt werden können,
g) wird die Röhre, die Schnittstelle und/oder die Drucksicherung derart ausgestaltet und/oder angeordnet betrieben, dass das Batteriemodul durch die Röhre, die Schnittstelle und/oder die Drucksicherung zumindest temporär hermetisch abgeschlossen ist,
h) werden zwei Blechrahmen derart ausgestaltet und betrieben, dass sie zur Aufnahme der Röhren an Stirn- und Rückseite gemäß dem Röhrenquerschnitt geformte Ausschnitte aufweisen, deren Ränder mit den Röhren verbunden sind,
i) werden die Blechrahmen zur Aufnahme der Batteriemodules derart ausgestaltet und betrieben, dass einem Batteriemoduls und, insbesondere benachbarten Batteriemodulen durch Wärmeübertragung verbundenen, angrenzenden Flächen, eine Vielzahl von Luftspalten derart gebildet werden, die derart verbunden und ausgestaltet betrieben werden, dass sie eine Struktur bilden, die seitens jeweiligem Batteriemodul abgegebene Wärme durch einen Kamineffekt kontrolliert ableiten, wobei die Ausschnitte und Öffnungen derart angeordnet und betrieben werden, dass die Abluftvorrichtung, insbesondere zwischen zwei Röhren, an diese angeschlossen betrieben wird,
j) werden die Blechrahmen zur Montage des Batteriesystems zumindest temporär mit einem Grundrahmen verbindbar ausgestaltet und betrieben,
k) wird jeweils ein erster Verschluss an die Stirnseite der Röhren angebracht und jeweils ein zweiter Verschluss an der Rückseite der Röhren, derart angebracht, dass für im Inneren der Röhren entstehenden Gase dicht betrieben wird,
l) wird zumindest die Röhre mit den Blechrahmen und/oder der Abluftvorrichtung zumindest teilweise auf Verschweißungen beruhend verbunden.

Weitere vorteilhafte Ausgestaltungen und Weiterbildungen der Erfindung sind durch die Unteransprüche angegeben.

Wird das erfindungsgemäße Batteriesystemgerüst derart weitergebildet, dass auf die Röhre zumindest eine um den Querschnitt der Röhre zumindest teilweise umlaufende Verstärkungsrippe angeschweißt ist, wird die Röhrenstruktur stabilisiert und vor Allem der Widerstand gegen Druck aus dem Inneren erhöht.

Wird das erfindungsgemäße Batteriesystemgerüst derart weitergebildet, dass die Röhre aus Edelstahl gebildet ist und so betrieben wird, ist ein Röhre gegeben, die eine sehr gute Kombination aus Brandfestigkeit, Stabilität und Wärmeleitfähigkeit bietet.

Alternativ oder ergänzend kann das erfindungsgemäße Batteriesystemgerüst gemäß einer Weiterbildung derart ausgestaltet sein und betrieben werden, dass die Wärmedämmung aus einem bidirektional dämmenden Werkstoff gebildet ist. Hierdurch kann die Wärmeabgabe in beide Richtungen dosiert erfolgen. Dadurch sind zusätzliche Freiheitsgrade bei der Optimierung des Schutzes gegeben.

Das erfindungsgemäße Batteriesystemgerüst kann auch alternativ oder ergänzend derart weitergebildet und betrieben werden, dass die Drucksicherung als eine mit der Röhre und/oder der Wärmedämmung verbundene Berstmembran ausgestaltet ist und betrieben wird. Hierdurch ist eine einfache und kostengünstige Realisierung der Drucksicherung gegeben, die ab einem determinierten Druck durch Brandabgase und/oder Erreichen einer determinierten Temperatur in Richtung der Abluftvorrichtung birst und Abgase und/oder Wärme damit abführen lassen kann. Diese Membran kann dann Teil der Röhre und/oder der Wärmedämmung sein.

Vorzugsweise wird das erfindungsgemäße Batteriesystemgerüst derart ausgestaltet sein und betrieben werden, dass die Drucksicherung als eine mit der Röhre und/oder der Wärmedämmung verbundene Berstscheibe ausgestaltet ist. Derartige Berstscheiben sind genormt und beinhalten in der Regel eine Berstmembran mit den oben genannten Vorteilen, so dass in dem Gehäuse bzw. der Wärmedämmung eine entsprechend der Norm ausgestaltete Aufnahmemöglichkeit angebracht werden kann. Solcherlei genormte Teile sind in der Regel in höheren Stückzahlen erhalten und weisen daher zu den genannten Vorteilen zusätzlich den Vorteil auf, dass sie kostengünstiger in der Anschaffung sind.

Alternativ oder ergänzend kann das erfindungsgemäße Batteriesystemgerüst derart weitergebildet werden, dass die Drucksicherung als mindestens ein mit der Röhre, Röhrendeckel und/oder der Wärmedämmung verbundene federgespannte Überdruckklappe ausgestaltet ist und betrieben wird. Eine federgespannte Druckklappe hat den Vorteil, dass sie lediglich Festkörper kleiner als der Durchmesser der Klappenöffnung durchlässt. Im Gegensatz zu der Berstmembram bzw. der Berstscheibe gelangen so also lediglich höchstens kleine, in der Regel einfacher entfernbare Festteile in die Abluftvorrichtung. Ferner ist die Überdruckklappe selbst keiner Zerstörung unterworfen und klappt nach Ablassen des Überdrucks wieder zurück, so dass dann die Sauerstoffzufuhr ins Innere des Moduls unterbrochen ist. Dies erhöht also zusätzlich den Brandschutz.

Wird das erfindungsgemäße Batteriesystemgerüst derart weitergebildet, dass das Gehäuse, insbesondere so viele der Elemente des Batteriesystemgerüsts wie möglich, aus Edelstahl gebildet ist und so betrieben wird, sind am Gerüst beteiligte Elemente gegeben, die eine sehr gute Kombination aus Brandfestigkeit, Stabilität und Wärmeleitfähigkeit bietet. Zudem entfällt bei Edelstahl eine bei anderen Stoffen oft notwendige Beschichtung und Lackierung zur Vermeidung von Rost. Diese sind potenziell brennbar. Daher wird durch diese Ausgestaltung auch die Brandlast reduziert.

Bei einer weiteren Weiterbildung des erfindungsgemäßen Batteriesystemgerüsts sind zur Abdichtung des ersten und/oder zweiten Verschlusses jeweils eine Dichtfläche zwischen Verschlüssen und Röhren angebracht. Hierdurch wird für Elemente der Röhre, die nicht verschweißt sind, gewährleistet, dass sie eine zumindest nahezu hermetische Abdichtung des Inneren bzw. Schutz des Röhrenäußeren erlauben. Beispielsweise kann ein Verschluss, insbesondere der zweite Verschluss so gestaltet sein, dass er geöffnet werden kann, um beispielsweise Modulausstausch vorzunehmen, oder dauerhaft verschlossen ausgeschlossen sein, also beispielsweise als ein eingeschweißter Deckel ausgeführt sein.

Vorzugsweise wird die Erfindung derart weitergebildet, dass gemäß einer Weiterbildung des Batteriegerüst die zweiten Verschlüsse jeweils mit der Rückseite der Röhren und/oder den Rändern der Ausschnitte des Blechrahmens verschweißt sind. Hier wird einem erfinderischen Gedanken Rechnung getragen, dass je mehr Verbindungen durch Verschweißung zustande kommen, desto stabiler und sicherer ist die Konstruktion. Ferner trägt dies dem erfinderischen Gedanken Rechnung, die anderen Module zu schützen, in dem das Innere eines ein TRA Ereignis aufweisenden Moduls möglichst hermetisch vom Äußeren isoliert ist.

Weitere Vorteile und Details der Erfindung werden ausgehend von dem in Figur 1 dargestellten Stand der Technik anhand der in den Figuren 2 bis 4 dargestellten Ansichten eines Ausführungsbeispiels der Erfindung erläutert.

Dabei zeigt
- FIGUR 1: schematisch eine gemäß Stand der Technik bei einem Batteriesystem anwendbare Definition von unterscheidbaren Ebenen,
- FIGUR 2: schematisch eine räumliche Darstellung eines Ausführungsbeispiels der erfindungsgemäßen Anordnung mit geschlossenen Röhren,
- FIGUR 3: schematisch eine räumliche Darstellung eines Ausführungsbeispiels der erfindungsgemäßen Anordnung mit offenen Röhren,
- FIGUR 4: schematisch eine räumliche Darstellung eines Ausführungsbeispiels der erfindungsgemäßen Röhre mit eingeführtem Batteriemodul,
- FIGUR 5: schematisch in Seitenansicht die Unterbringung eines erfindungsgemäßen Gerüsts in einem Maschinenraum mit einem von einem Maschinengang einzuführenden Batteriemodul.

Bei den Ansichten der Ausführungsbeispiele stellen die beschriebenen Komponenten der Ausführungsform jeweils einzelne, unabhängig voneinander zu betrachtende, Merkmale der Erfindung dar, welche die Erfindung jeweils auch unabhängig voneinander weiterbilden und damit auch einzeln oder in einer anderen als der gezeigten Kombination als Bestandteil der Erfindung, wie sie in den Ansprüchen definiert wird, anzusehen sind.

Des Weiteren sind die beschriebenen Komponenten der dargestellten Ausführungsform auch durch weitere der bereits beschriebenen Merkmale der Erfindung ergänzbar.

Etwaige Angaben zu Funktionen und Wirkungsweise sind zudem als ein Ausführungsbeispiel erfindungsgemäßer Verfahrensweise zu betrachten.

Gleiche Bezugszeichen haben in den verschiedenen Figuren die gleiche Bedeutung.

In der FIGUR 1 ist wie eingangs beschrieben die Aufteilung eines typisches Lithium-Ionen Batteriesystem für Traktions- und Bordnetzanwendungen dargestellt. Diese Aufteilung dient als Grundlage für die Bestimmung von Funktionseinheiten. Diese werden unter anderem für die Definition von Sicherheitsanforderungen gemäß der Norm EN 62619 verwandt.

Zu erkennen ist die erste Ebene E1, die eine erste durch eine Batteriezelle gebildete Funktionseinheit bezeichnet. Des Weiteren ist die zweite Ebene E2 zu erkennen, die eine zweite durch ein Batteriemodul gebildete Funktionseinheit bezeichnet, welche in der Regel aus einer Mehrzahl von Zellen, also ersten Funktionseinheiten gebildet wird. Schließlich ist noch die dritte Ebene E3 zu erkennen, welche die durch ein Batteriesystem gebildete dritte Funktionseinheit bezeichnet, die aus mindestens einem Batteriemodul gebildete wird.

Die Sicherheitsanforderung gemäß der Norm EN 62619 der sog. Thermal Propagation Test (TPT) ist dann erfüllt, wenn nachgewiesen werden kann, dass das System derart ausgestaltet ist, dass bei einem TRA entweder auf Zellebene E1, Modulebene E2 oder auf Batteriesystemeben E3 Brände ausgeschlossen werden können.

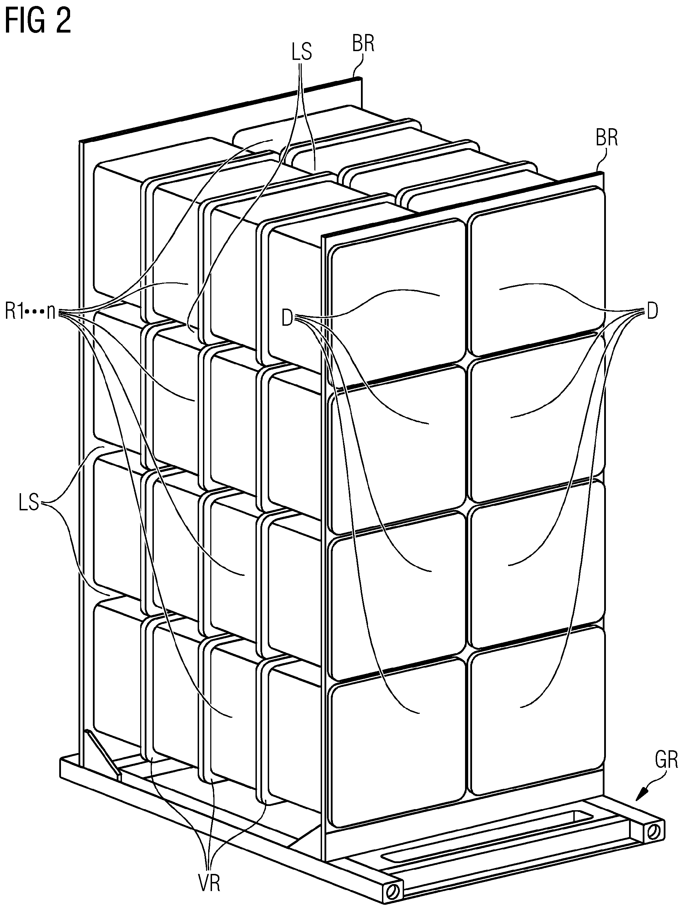

Die Erfindung schlägt dazu ein Konzept zur Umsetzung des TRA Schutzes auf Modulebene E2 vor, welches in einen Brandschutz der Ebene E3 mündet und somit die zweite Alternative gemäß Norm realisiert, wobei die in FIGUR 2 bis FIGUR 5 gezeigten Ansichten eines Ausführungsbeispiels der Erfindung eine Konstruktion zeigen, die sich erfindungsgemäß durch eine besonders leichte Umsetzung auszeichnen.

In der FIGUR 2 ist als ein Ausführungsbeispiel der erfindungsgemäßen Anordnung eine Gerüststruktur in räumlicher Darstellung gezeigt.

Zu erkennen ist, dass das Gerüst einen Grundrahmen GR aufweist. Auf diesem sind erfindungsgemäß ausgeschnittene Blechrahmenteile BR1...B2 befestigt. Zur Befestigung kann eine Lösbare Verbindung, wie beispielsweise Schraub-/Nietverbindung, und/oder nicht lösbare, wie beispielsweise Verschweißung, angewandt werden.

Der Grundrahmen GR ist insbesondere auch derart ausgestaltet, dass damit die Konstruktion in einem Maschinenraum eines Zuges, vorzugsweise lösbar, befestigt werden kann.

Wie beim vorderen, also der Stirnseite des Gerüsts angeordneten, Blechrahmenteil BR1 zu erkennen, weist das Blechrahmenteil BR1 rechteckige Ausschnitte. Dies gilt auch für das nicht vollständig erkennbaren hintere Blechrahmenteil B2, welches sich an der Rückseite des Gerüsts befindet.

Zu erkennen ist ferner, dass zwischen den ausgeschnittenen Blechrahmenteilen BR1...BR2 gemäß Beispiel n=8 rechteckig geformte Röhren R_{1...n} befestigt sind.

Die Röhren R_{1...n} weisen dabei eine einem Ausschnitt A_{1...2n} derart entsprechend dimensionierten rechteckigen Querschnitt auf, dass die Röhren R_{1...n} an die den rechteckigen Ausschnitt A_{1...2n} des jeweiligen Blechrahmens B1...B2 umfassenden Teile des Blechrahmens B1...B2 durch Schweißen befestigt werden.

Eine Röhre R_{1...n} wird als an ihrer Stirnseite und ihrer Rückseite mit an zwei gegenüberliegenden Ausschnitten A_{1...2n} durch das Schweißen angebracht.

Die Röhre R_{1...n} ist dabei jeweils derart gebildet, dass die Seitenwände der Röhre R_{1...n} jeweils miteinander verschweißt sind, so dass es sich jeweils um einen hermetischen Verschluss an diesen sich durch jeweils zwei verschweißte Seitenteile bildenden Kanten handelt.

Ferner kann auch die Rückseite der jeweiligen Röhre R_{1...n} derart verschlossen sein, dass ein Deckel daran angeschweißt wird, so dass auch hier ein hermetischer Verschluss gebildet wird.

Die Röhren R_{1...n} dienen zur Aufnahme von Batteriemodulen (nicht dargestellt). Damit ein Batteriemodul eingeführt und auch jederzeit wieder entnommen werden kann, wird die Stirnseite der Röhren R_{1...n} nicht verschweißt, sondern ein weiterer Deckel wird, beispielsweise nach Aufnahme eines Batteriemoduls, lösbar an die Stirnseite gebracht.

Falls es erforderlich sein sollte den Verschluss (Deckel) D auf der Rückseite auch lösbar zu gestalten, um beispielsweise eine Wartung/Entnahme durchführen zu können, kann dieser ebenfalls lösbar angebracht sein.

Dabei ist die Röhre R_{1...n}, der Deckel D und/oder der ausgeschnittene Blechrahmen BR1...BR2 derart ausgestaltet und bzgl. der Dimensionierung derart aufeinander abgestimmt, dass der lösbare Verschluss dicht und gegen einen im inneren entstehenden Druck stabil in seiner Position bleibt und möglichst keine Gase entweichen können.

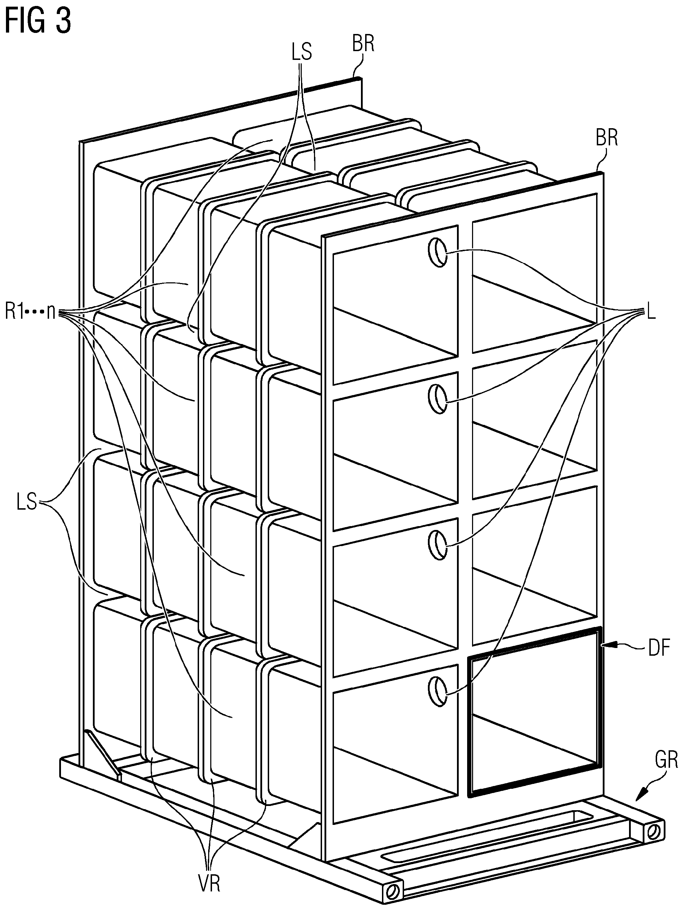

Hierzu können Dichtflächen DF, von der eine beispielhaft in der FIGUR 3 gezeigt ist, zwischen Deckel D und der jeweiligen Röhre R_{1...n} auf die der Deckel D angebracht wird, beispielsweise durch Klemmung, alternativ oder ergänzend zusätzlich einen Beitrag zur Dichtigkeit leisten.

Wie in der FIGUR 2 zu erkennen ist, erfolgt gemäß dem gezeigten Ausführungsbeispiel auch eine Verstärkung der Röhren R_{1...n} derart, dass zur Erhöhung der Stabilität der verschweißten Seitenteile Verstärkungsrippen VR angebracht sind. Diese können hierzu auf die Röhren aufgefädelt und dann ebenfalls mit durch Verschweißen mit den Seitenteilen verbunden werden.

Das Material, aus dem die Seitenteile und die Deckel D gebildet sind, ist vorzugsweise Edelstahl. Dies hat den Vorteil, dass es bzgl. Wärmeleitfähigkeit, Stabilität und Brandfestigkeit sehr gute Werte aufweist und eine ideale Kombination darstellt. Ferner aufgrund des Wegfalls der Notwendigkeit einer Oberflächenbehandlung, beispielsweise durch Lacke, es auch weniger bzw. keine Brandlast aufweist, die diese idealen Eigenschaften schmälern könnten.

In der FIGUR 2 ist zu erkennen, dass zwischen Seitenteilen der einzelner sich gegenüberstehender Röhren R_{1...n} nach dem Befestigen zwischen den Blechrahmen Bl...B2 Luftspalte LS gebildet werden.

Dies kann dadurch erreicht werden, dass die Dimensionierung der Blechrahmen BR1...BR2, der Röhren R_{1...n} und/oder Deckel D entsprechend gestaltet ist, dass die Seitenteile der Röhren R_{1...n} in einem gewünschten Abstand zu liegen kommen und so einen Luftspalt LS bilden.

Diese Luftspalte LS dienen der Kühlung des Batteriesystemgerüsts gemäß der Erfindung, denn im Fall eines Brandes entstehende Wärme wird über die Seitenwände an die Luft in den Luftspalten LS abgegeben und es kann damit ein Kamineffekt verwirklicht werden, der die aufgewärmte Luft zügig aus dem Gerüst führt.

In der FIGUR 3 ist ebenfalls eine räumliche Darstellung des Gerüsts zu sehen, allerdings ohne stirnseitige Deckel D, so dass ein Teil des Inneren der Röhren R_{1...n} gemäß Ausführungsbeispiel zu sehen ist.

Zu erkennen ist dabei, dass im vorderen Teil einer Röhre R_{1...n} eine Kreisförmige Aussparung L auf derjenigen im Bezug zum Grundrahmen GR senkrechten Seitenwand angeordnet ist, die mit einer gegenüberliegen senkrechten Seitenwand einer weiteren Röhre R_{1...n} einen senkrecht zum Grundrahmen GR angeordneten Luftschlitz LS bildet.

In dieser Aussparung kann eine diese Aussparung L ausfüllend eine Vorrichtung zur Drucksicherung, beispielsweise eine (nicht dargestellte) Berstscheibe, eine direkt in der Aussparung befestigte (nicht dargestellte) Berstmembran oder eine (nicht dargestellte) federgespannte Druckklappe, untergebracht sein, die bei einer, beispielsweise durch einen Brand verursachten, Gasbildung in Bezug zur Röhre R_{1...n} nach außen hin einen Druck bzw. das gebildete Gas kontrolliert ablässt, wenn dieser einen vorgegebenen Wert erreicht, der eine Stabilität der Röhren R_{1...n} gefährden könnte.

Um benachbarte Röhren R_{1...n} nicht zu gefährden, ist daher an dieser Stelle in den Luftschlitz LS ein Abgaskamin AK eingebracht, der an allen derart ausgestalteten Aussparungen L dicht derart an diese Aussparungen L bzw. die Drucksicherung angeschlossen ist, dass er das Gas abführen kann, ohne dass es anderweitig entweicht.

Hierdurch wird eine der vorteilhaften Funktionen der Erfindung sichergestellt, nämlich, dass bei einem TRA der Schaden auf das betroffene Batteriemodul begrenzt werden.

Abgaskamin AK und Aussparung L für die Drucksicherung sind aber nicht auf die beschriebenen Ausführungen beschränkt. Der Abgaskamin kann auch an Stirn- oder Rückseite platziert sein. Ebenso die Aussparungen L.

Die FIGUR 3 zeigt ferner schematisch die oben bereits angesprochene Dichtfläche DF wie sie zwischen jedem Deckel D und Röhre R_{1...n} vorgesehen sein kann. Am Boden der Röhren R_{1...n} zu sehen sind auch Befestigungselemente bzw. Gegenstücke für eine Befestigung, wie sie für die lösbare Befestigung der Module BM vorgesehen sein können.

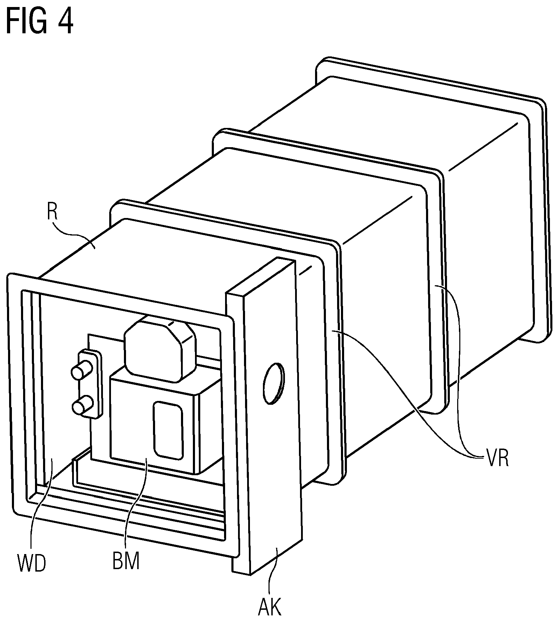

Wie in FIGUR 4 zu erkennen ist, ist der Abgaskamin AK derart im Vergleich zur Länge der Röhren R_{1...n} schmal geformt, dass die senkrecht ausgeformten Luftschlitze LS den beschriebenen Kamineffekt für das Abführen von einer den Röhren R_{1...n} über Wärmeübertragung abgegebenen Wärmeenergie bereitstellen können.

Ferner sieht man in der FIGUR 4 ein in die Röhre R_{1...n} eingebrachtes Batteriemodul BM und kann erkennen, dass dieses am Boden der Röhre R_{1...n}, beispielsweise über einen Rahmen, befestigt sein kann.

Zwischen Batteriemodul und Wänden der sie beinhaltenden Röhre R_{1...n} ist erfindungsgemäß eine Wärmedämmung WD vorgesehen. Vorzugsweise ist die Wärmedämmung WD bidirektional gegeben, so dass die Wärmeenergie, die von außen über die Seitenwände der Röhre R_{1...n}, beispielsweise durch einen Brand in einer benachbarten Röhre R_{1...n} verursacht, an die Wärmedämmung gelangt, lediglich dosiert nach innen abgegeben wird.

Umgekehrt, wird eine im inneren sich bildende Wärmeenergie nur dosiert nach außen abgeben.

Zu diesem Ziel tragen unter anderem auch die Luftschlitze LS sowie die Röhren R_{1...n} und die bidirektionalen Wärmedämmungen bei. Die Röhren R_{1...n} in dem es Stabilität aber auch sehr gute Wärmeleitfähigkeiten aufweist und die Wärmedämmung WD, da sie sowohl das jeweilige Batteriemodul BM von außen eindringender Wärme schützen als auch eine Abgabe der Hitze bei einem TRA so weit einschränken, dass dies allein und/oder im Zusammenwirken mit den anderen erfindungsgemäßen Merkmalen der Anordnung bzw. des Verfahrens ausreicht, um die Funktionalität der sicheren Batteriemodule nicht zu stören.

Die Wärmedämmung WD und/oder die Röhre R ist dabei so ausgestaltet, dass es das Batteriemodul, nach dem es eingeführt worden ist, nahezu vollständig umfasst. Lediglich für notwendige Anschlüsse weist die Röhre und/oder die Wärmedämmung, neben der Aussparung für die Drucksicherung L, weitere Aussparungen auf. Beispielsweise für den Anschluss einer Schnittstelle an das Batteriemodul, damit dieses wiederrum an das Batteriesystem angeschlossen werden kann.

Die nicht dargestellte Schnittstelle ist dabei vorzugsweise ebenfalls so ausgestaltet, dass es den Druck von Gas im Inneren nicht rauslässt und brandfest ist.

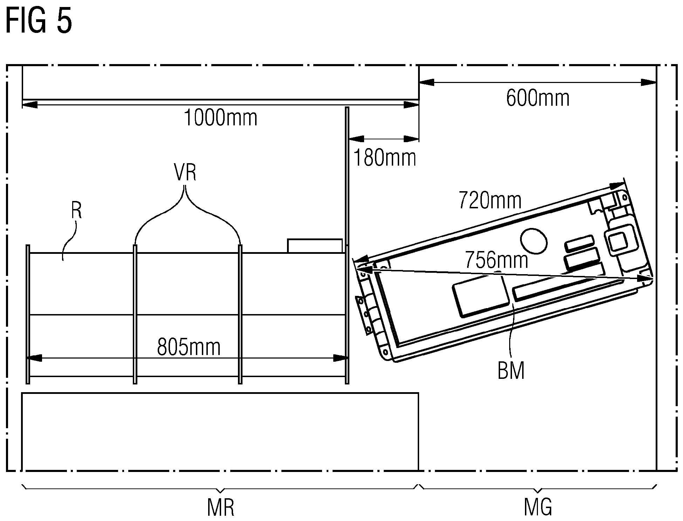

In der FIGUR 5 sieht man nun schematisch wie ein erfindungsgemäßes Batteriesystemgerüst in einem Maschinenraum MR untergebracht ist. Dieser weist im Querschnitt 1000 mm auf in die das Batteriesystemgerüst eingebracht ist.

Diese sind also in der Regel räumlich stark begrenzt und nur über einen ebenfalls engen, im Beispiel 600 mm aufweisenden, Maschinenraumgang MG für notwendige Manipulationen erreichbar.

Hier zeigt sich wie eine der Vorteile der Erfindung zum Tragen kommt. Aufgrund der mit dem Gerüst verschweißten und über Rahmen im Maschineraum MR befestigten Röhren R kann nach Entfernen des Verschlusses auf der Stirnseite der Röhre R ein Batteriemodul BM eingebracht werden. Aufgrund der Tatsache, dass das reine, also im Wesentlichen ohne nicht zum Modul gehörende Elemente beaufschlagte, Batteriemodul eingeführt wird, hat das Batteriemodul BM im dargestellten Beispiel eine Länge von 720 mm und eine Diagonale von 756 mm. Es wäre somit länger als der Maschinenraumgang MG breit ist. Dennoch kann es Dank der Erfindung eingebracht werden.

Das dargestellte Batteriesystemgerüst hat dazu eine Tiefe von 805 mm, also 180 mm kürzer als der Maschinenraum MR im Querschnitt aufweist, so dass das Batteriemodul diagonal in einer Art "Schiebgrab" Bewegung eingeführt werden kann. Also zu Beginn diagonal eingebracht, bis eine waagerechte Fortführung der Bewegung des Batteriemoduls BM in die Röhre R möglich ist.

Die Erfindung bietet sich vor Allem bei einem Einsatz von für "unsicheren" Zellen an. Hierdurch wird der Einsatz von Lithium-Zellen mit sehr hoher Energiedichte in Fahrzeugen, insbesondere Schienenfahrzeugen, möglich.

Die Fehleranfälligkeit der Konstruktion gegen extreme Temperaturen wird durch die geringe Anzahl an Dichtflächen weiter reduziert. Der Abgaskamin AK zu jedem Modul BM wird mittig zwischen den Röhren R_{1...n} geführt und angeschlossen, um möglichst viel Bautiefe mit der Röhre R, R_{1...n} selbst auszunutzen.

Ein weiterer Vorteil, der auch diesen Einsatz unterstützt, ist, dass der TRA auf ein durch TRA betroffenes, also in der Regel unsicheres, Batteriemodul begrenzt wird.

Es wird demnach durch die Erfindung gewissermaßen eine kleinste brennbare Einheit definiert, die sich in einem Batteriemodul im inneren seiner Röhre R_{1...n} erschöpft.

Das Konzept ist speziell für Lithium-Ionen Zellen, die keine Schutzmechanismen auf Zellebene besitzen, gedacht. Sie ist allerdings nicht darauf eingeschränkt. Im Grunde bietet die Erfindung die Reduktion von Schäden durch zerstörerische Energien eines Brandes in jedwedem Modul. Entfaltet aber durch sein Schutzkonzept eben besonders beim Einsatz unsicherer Zellen die meisten Vorteile.

Durch die Erfindung wird möglich, dass nach einem Brandereignis, lediglich das betroffene Modul ausgetauscht werden muss. Je nach Steuerung und Verschaltung der Module bzw. unterstützt durch Redundanzen, kann in so einem Fall der Betrieb des Batteriesystems BS nahezu unterbrechungsfrei fortgeführt werden.

Das erfindungsgemäße Konstrukt ist dabei derart ausgestaltet, dass es auf vorteilhafte Weise auch in einem Maschinenraum eines Schienenfahrzeugs untergebracht werden kann und dort ein Austausch eines Batteriemoduls trotz der beengten Verhältnisse dort erfolgen, in dem das Gerüst so angeordnet wird, dass der stirnseitige Deckel D gelöst und das alte Batteriemodul in Richtung Maschinenraumgang herausgenommen und durch ein neues ersetzt werden. Ist dieser Gang sehr eng, kann das Gerüst, die zu verwendenden Batteriemodule und/oder die Röhren R_{1...n} derart dimensioniert werden, dass ein Batteriemodul schräg eingeführt oder entnommen werden kann. Hierzu könnte beispielsweise die Höhe der Röhren R_{1...n} höher angesetzt sein, um einen größeren Winkel beim bei in bzw. aus der Röhre R_{1...n} führen des Batteriemoduls zu ermöglichen.

Da die erfindungsgemäße Anordnung und das erfindungsgemäße Verfahren ein aktives Löschen obsolet machen und es sich bei der vorgesehenen Kühlmethode gemäß Erfindung und den Weiterbildungen um eine rein passive Lösung handelt, ist der erfindungsgemäße Schutz in allen Betriebszuständen gegeben, insbesondere auch im abgerüsteten Zustand des Fahrzeugs.

Mit der Erfindung kann man sich daher für einen Schutz gemäß TPT hinsichtlich von einem in der ersten Ebene E1 erforderlichen Sicherheitsmechanismus auf Zellebene lösen. Man kann wesentlich günstigere Lithium-Ionen Zellen einsetzen. Diese sind in einer wesentlich größeren Anzahl verfügbar als sicherere Lithium-Ionen Zellen, und reduzieren somit die Zellkosten des erfindungsgemäßen Batteriesystems BS. Mit der erfindungsgemäßen Lösung bedarf es auch keines im Wesentlichen in der dritte Ebene E3 realisierten Konzepts, welches auch nur sehr schwer implementierbar ist, da die freiwerdende TRA Energie des gesamthaft brennenden Batteriesystems mit einer hohen Anzahl Zellen jegliche Schutzmaßnahmen technisch unrealisierbar und unwirtschaftlich macht.

Durch die Erfindung wird also der Nachteil überwunden, der beim Einsatz eines TRA beständigen Container für das gesamte Batteriesystem BS ergibt. Dann ist nämlich ein Verlust des gesamten Systems allein aufgrund einer TRA einer Zelle gegeben. Ferner spart man sich ein schweres Außengehäuse, die für große Energiemengen kostentreibend dimensioniert sein müssen.

Die Erfindung reduziert zudem Ausfallwahrscheinlichkeiten.

Durch die Erfindung ist ferner eine derart robuste Lösung gegenüben, dass sogar ein Auslegungspuffer für kommende Zellgenerationen mit noch höherer Energiedichte vorhanden ist. Für derzeitige Systeme also mehr als ausreichenden Schutze bietet.

Der Aufwand, der hierzu erforderlich ist, erschöpft sich in einem akzeptablen Einsatz von zusätzlichem Material und/oder Mehrgewicht für den erfindungsgemäßen TRA Schutz, da die Röhren R_{1...n} auch gleichzeitig Teile des gesamten Gerüsts bilden.

Die signifikante Gewichtsreduktion im Vergleich zu Konstruktionen, die im Wesentlichen lösbare Verbindungen aufweisen. Hierdurch ist auch ein hoher Automatisierungsgrad der Fertigung möglich. Ferner bietet das Schweißen den Vorteil, dass eine hohe Gasdichtigkeit durch Fügen vieler Einzelteile erzielt wird. Geringe Anzahl Dichtflächen sind hierdurch erforderlich.

Durch die erfindungsgemäßen Merkmale ist auch eine Austauschbarkeit der Batteriemodule im in gängigen Maschinenräumen, beispielsweise von Zügen, möglich.

Die Erfindung ist nicht auf die gezeigten und diskutierten Ausführungsbeispiele der Anordnung und des Verfahrens sowie deren Weiterbildungen beschränkt. Vielmehr ist es so, dass mit der Erfindung, wie sie durch die Ansprüche definiert ist, alle - auch nicht angesprochene - durch die Ansprüche abgedeckten Varianten umfasst sein sollen.

## Patentansprüche

1. Batteriesystemgerüst zur Aufnahme von mindestens einem ersten und mindestens einem zweiten Batteriemodul (BM) in einem Fahrzeug zur Bildung eines Batteriesystems, vorzugsweise in einem Maschinenraum des Fahrzeugs, insbesondere eines Schienenfahrzeugs, wobei
a) das erste Batteriemodul und zweite Batteriemodul (BM) aus mehreren, insbesondere Lithium-Ionen, Batteriezellen bildbar ist, **dadurch gekennzeichnet, dass**
b) zumindest das erste Batteriemodul, in einer separaten, insbesondere aus vier einzelnen Seitenteilen rechteckig gebildeten, Röhre (R_{1_n}) anordenbar ist,
c) das Batteriesystemgerüst die Röhre umfasst und die Röhre (R_{1...n}) aus einem brandfesten Material gebildet ist,
d) die Röhre (R_{1...n}) eine in einer Röhrenseite ausgebildete Öffnung (L) zur Bereitstellung einer Drucksicherung aufweist,
e) die Röhre (R_{1...n}) eine brandfeste Schnittstelle für den Anschluss und Betrieb des Batteriemoduls (BM) im Batteriesystem (BS) umfasst,
f) die Röhre (R_{1...n}) derart ausgestaltet ist, dass an jeder Öffnung (L) eine Drucksicherung und eine brandfeste Abluftvorrichtung (AK), insbesondere ein Kamin, angebracht ist, dass seitens der Drucksicherung emittierte Gase vermittelt durch die Abluftvorrichtung (AK) kontrolliert abgeführt werden können,
g) die Röhre (R_{1...n}), die Schnittstelle und/oder die Drucksicherung derart ausgestaltet und/oder angeordnet ist, dass das Batteriemodul (BM) durch die Röhre (R_{1...n}), die Schnittstelle und die Drucksicherung zumindest temporär hermetisch abgeschlossen ist,
h) zwei Blechrahmen (BR) derart ausgestaltet sind, dass sie zur Aufnahme der Röhren (R_{1...n}) an Stirn- und Rückseite gemäß dem Röhrenquerschnitt geformte Ausschnitte aufweisen, deren Ränder mit den Röhren R_{1...n} verbunden sind,
i) die Blechrahmen (BR) zur Aufnahme der Batteriemodule (BM) derart ausgestaltet sind, dass zwischen Röhre (R_{1...n}) eines Batteriemoduls (BM) und, insbesondere mit benachbarten Batteriemodulen (BM) durch Wärmeübertragung verbundenen, angrenzenden Flächen, eine Vielzahl von Luftspalten (LS) derart gebildet werden, die derart verbunden und ausgestaltet sind, dass sie eine Struktur bilden, die seitens Batteriemodul (BM) abgegebene Wärme durch einen Kamineffekt kontrolliert ableitet, wobei die Ausschnitte und Öffnungen (L) derart angeordnet sind, dass die Abluftvorrichtung (AK), insbesondere zwischen zwei Röhren (R_{1...n}), an diese angeschlossen ist,
j) die Blechrahmen zur Montage des Batteriesystems zumindest temporär mit einem Grundrahmen (GR) verbindbar ausgestaltet sind,
k) jeweils ein erster Verschluss an der Stirnseite der Röhren (R_{1...n}) angebracht ist und jeweils ein zweiter Verschluss an der Rückseite der Röhren (R_{1...n}), derart angebracht ist, dass er für im Inneren der Röhren R_{1...n} entstehende Gase dicht ist,
l) zumindest die Röhre (R_{1...n}) mit den Blechrahmen (BR) und/oder der Abluftvorrichtung (AK) zumindest teilweise auf Verschweißungen beruhend verbunden ist.

2. Batteriesystemgerüst nach dem vorhergehenden Anspruch, **dadurch gekennzeichnet, dass** auf die Röhre (R_{1...n}) zumindest eine um den Querschnitt der Röhre (R_{1...n}) zumindest teilweise umlaufende Verstärkungsrippe angeschweißt ist.

3. Batteriesystemgerüst nach dem vorhergehenden Anspruch, **dadurch gekennzeichnet, dass** die Röhre (R_{1...n}), die Verstärkungsrippen, die Bleche und/oder die Abluftvorrichtung (AK) aus Edelstahl gebildet sind.

4. Batteriesystemgerüst nach einem der vorhergehenden Ansprüche, **dadurch gekennzeichnet, dass** eine, vorzugsweise aus einem bidirektional dämmenden Werkstoff gebildete, Wärmedämmung (WD) in der Röhre (R1...n) derart angeordnet ist, dass sie bei einem in der Röhre angeordnetem Batteriemodul, zwischen dem Batteriemodul (BM) und Wänden der sie beinhaltenden Röhre (R1...n) angeordnet ist.

5. Batteriesystemgerüst nach dem vorherigen Anspruch, **dadurch gekennzeichnet, dass** die Drucksicherung mit der Wärmedämmung verbunden ist

6. Batteriesystemgerüst nach einem der vorhergehenden Ansprüche, **dadurch gekennzeichnet, dass** die Drucksicherung als eine in der Öffnung der Röhre (R_{1...n}) angeordnete, mit der Röhre (R_{1...n}) und/oder Abluftvorrichtung (AK) verbundene Berstmembran ausgestaltet ist.

7. Batteriesystemgerüst nach einem der vorhergehenden Ansprüche, **dadurch gekennzeichnet, dass** die Drucksicherung als Berstscheibe ausgestaltet ist.

8. Batteriesystemgerüst nach einem der vorhergehenden Ansprüche, **dadurch gekennzeichnet, dass** die Drucksicherung als mindestens eine federgespannte Überdruckklappe ausgestaltet ist.

9. Batteriesystemgerüst nach einem der vorhergehenden Ansprüche, **dadurch gekennzeichnet, dass** zur Abdichtung des ersten und/oder zweiten Verschlusses (D) jeweils eine Dichtfläche (DF) zwischen Verschlüssen (D) und Röhren (R_{1...n}) angebracht ist.

10. Batteriesystemgerüst nach einem der vorhergehenden Ansprüche, **dadurch gekennzeichnet, dass** zur Abdichtung die zweiten Verschlüsse (D) jeweils mit der Rückseite der Röhren (R_{1...n}) und/oder den Rändern der Ausschnitte des Blechrahmens (BR) verschweißt sind.

11. Verfahren zur Aufnahme von mindestens einem ersten und mindestens einem zweiten Batteriemodul (BM) in einem Fahrzeug zur Bildung eines Batteriesystems (BS), vorzugsweise in einem Maschinenraum des Fahrzeugs, insbesondere eines Schienenfahrzeugs, wobei
a) das erste Batteriemodul und zweite Batteriemodul (BM) aus mehreren, insbesondere Lithium-Ionen, Batteriezellen gebildet und betrieben wird, **dadurch gekennzeichnet, dass**
b) zumindest das erste Batteriemodul, in einer separaten, insbesondere aus vier einzelnen Seitenteilen rechteckig gebildeten, Röhre (R_{1...n}) angeordnet und betrieben wird,
c) die Röhre (R_{1...n}) aus einem brandfesten Material gebildet wird,
d) die Röhre (R_{1...n}) eine in einer Röhrenseite ausgebildete Öffnung (L) zur Bereitstellung einer Drucksicherung umfasst,
e) die Röhre (R_{1..n}) eine brandfeste Schnittstelle für den Anschluss und Betrieb des Batteriemoduls (BM) im Batteriesystem (BS) umfasst,
f) die Röhre (R_{1...n}) derart ausgestaltet und betrieben wird, dass an jeder Öffnung (L) eine Drucksicherung und eine brandfeste Abluftvorrichtung (AK), insbesondere ein Kamin, angebracht ist, dass seitens der Drucksicherung emittierte Gase vermittelt durch die Abluftvorrichtung (AK) kontrolliert abgeführt werden können,
g) die Röhre (R_{1...n}), die Schnittstelle und/oder die Drucksicherung derart ausgestaltet und/oder angeordnet betrieben werden, dass das Batteriemodul (BM) durch die Röhre (R_{1...n}), die Schnittstelle und die Drucksicherung zumindest temporär hermetisch abgeschlossen ist,
h) zwei Blechrahmen (BR) derart ausgestaltet und betrieben werden, dass sie zur Aufnahme der Röhren (R_{1...n}) an Stirn- und Rückseite gemäß dem Röhrenquerschnitt geformte Ausschnitte aufweisen, deren Ränder mit den Röhren R_{1...n} verbunden sind,
i) die Blechrahmen (BR) zur Aufnahme der Batteriemodule (BM) derart ausgestaltet und betrieben werden, dass zwischen Röhre (R_{1...n}) eines Batteriemoduls (BM) und, insbesondere mit benachbarten Batteriemodulen (BM) durch Wärmeübertragung verbundenen, angrenzenden Flächen, eine Vielzahl von Luftspalten (LS) derart gebildet werden, die derart verbunden und ausgestaltet betrieben werden, dass sie eine Struktur bilden, die seitens Batteriemodul (BM) abgegebene Wärme durch einen Kamineffekt kontrolliert ableitet, wobei die Ausschnitte und Öffnungen (L) derart angeordnet und betrieben werden, dass die Abluftvorrichtung (AK), insbesondere zwischen zwei Röhren (R_{1...n}), an diese angeschlossen betrieben wird,
j) die Blechrahmen (BR) zur Montage des Batteriesystems zumindest temporär mit einem Grundrahmen (GR) verbindbar ausgestaltet und betrieben werden,
k) jeweils ein erster Verschluss an der Stirnseite der Röhren (R_{1...n}) angebracht und jeweils ein zweiter Verschluss an der Rückseite der Röhren (R_{1...n}), derart angebracht wird, dass er für im Inneren der Röhren R_{1...n} entstehende Gase dicht betrieben wird,
l) zumindest die Röhre (R_{1...n}) mit den Blechrahmen (BR) und/oder der Abluftvorrichtung (AK) zumindest teilweise auf Verschweißungen beruhend verbunden wird.

## Claims

1. Battery system rack for accommodating at least one first and at least one second battery module (BM) in a vehicle in order to form a battery system, preferably in an engine compartment of the vehicle, in particular of a rail vehicle, wherein
a) the first battery module and second battery module (BM) can be formed from a plurality of, in particular lithium ion, battery cells, **characterized in that**
b) at least the first battery module can be arranged in a separate tube (R_{1...n}), which is in particular formed rectangularly from four individual side parts,
c) the battery system rack comprises the tube and the tube (R_{1...n}) is formed from a fire-resistant material,
d) the tube (R_{1...n}) has an opening (L), which is formed in a tube side, for providing pressure relief,
e) the tube (R_{1...n}) comprises a fire-resistant interface for the connection and operation of the battery module (BM) in the battery system (BS),
f) the tube (R_{1...n}) is designed such that, at every opening (L), a pressure relief means and a fire-resistant exhaust air device (AK), in particular a chimney, is mounted such that gases emitted by the pressure relief means can be discharged in a controlled manner so as to be conveyed through the exhaust air device (AK),
g) the tube (R_{1...n}), the interface and/or the pressure relief means is designed and/or arranged in such a manner that the battery module (BM) is at least temporarily hermetically sealed by the tube (R_{1...n}), the interface and the pressure relief means,
h) two sheet metal frames (BR) are designed such that, at front and back ends, in order to accommodate the tubes (R_{1...n}), they have cutouts formed according to the tube cross section, the edges of which cutouts are connected to the tubes R_{1...n} ,
i) the sheet metal frames (BR) for accommodating the battery modules (BM) are designed in such a manner that, between a tube (R_{1...n}) of a battery module (BM) and adjoining surfaces, which are in particular connected to adjacent battery modules (BM) by heat transfer, a multiplicity of air gaps (LS) are formed in such a manner, and are connected and designed in such a manner, that they form a structure which dissipates heat emitted by the battery module (BM) in a controlled manner by a chimney effect, wherein the cutouts and openings (L) are arranged in such a manner that the exhaust air device (AK), in particular between two tubes (R_{1...n}), is connected to said tubes,
j) the sheet metal frames for mounting the battery system are designed to be connectable at least temporarily to a base frame (GR),
k) a first closure is mounted at the front end of each of the tubes (R_{1...n}) and a second closure is mounted at the back end of each of the tubes (R_{1...n}) so as to be tight with respect to gases produced inside the tubes R_{1...n},
l) at least the tube (R_{1...n}) is connected to the sheet metal frames (BR) and/or the exhaust air device (AK) at least partially based on welding.

2. Battery system rack according to the preceding claim, **characterized in that** at least one reinforcement rib which at least partially surrounds the cross section of the tube (R_{1...n}) is welded onto the tube (R_{1...n}).

3. Battery system rack according to the preceding claim, **characterized in that** the tube (R_{1...n}), the reinforcement ribs, the metal sheets and/or the exhaust air device (AK) are formed from stainless steel.

4. Battery system rack according to one of the preceding claims, **characterized in that** thermal insulation (WD) preferably formed from a bidirectionally insulating material is arranged in the tube (R_{1...n}) in such a manner that, when a battery module is arranged in the tube, the thermal insulation is arranged between the battery module (BM) and walls of the tube (R_{1...n}) containing it.

5. Battery system rack according to the preceding claim, **characterized in that** the pressure relief means is connected to the thermal insulation.

6. Battery system rack according to one of the preceding claims, **characterized in that** the pressure relief means is in the form of a rupture membrane arranged in the opening of the tube (R_{1...n}) and connected to the tube (R_{1...n}) and/or the exhaust air device (AK).

7. Battery system rack according to one of the preceding claims, **characterized in that** the pressure relief means is in the form of a rupture disk.

8. Battery system rack according to one of the preceding claims, **characterized in that** the pressure relief means is in the form of at least one spring-loaded pressure relief flap.

9. Battery system rack according to one of the preceding claims, **characterized in that**, in order to seal the first and/or second closure (D), a sealing surface (DF) is in each case provided between closures (D) and tubes (R_{1...n}).

10. Battery system rack according to one of the preceding claims, **characterized in that**, for sealing purposes, the second closures (D) are each welded to the back side of the tubes (R_{1...n}) and/or to the edges of the cutouts of the sheet metal frame (BR).

11. Method for accommodating at least one first and at least one second battery module (BM) in a vehicle in order to form a battery system (BS), preferably in an engine compartment of the vehicle, in particular of a rail vehicle, wherein
a) the first battery module and second battery module (BM) are formed from a plurality of, in particular lithium ion, battery cells, and operated, **characterized in that**
b) at least the first battery module is arranged in a separate tube (R_{1...n}), which is in particular formed rectangularly from four individual side parts, and operated,
c) the tube (R_{1...n}) is formed from a fire-resistant material,
d) the tube (R_{1...n}) comprises an opening (L), which is formed in a tube side, for providing pressure relief,
e) the tube (R_{1...n}) comprises a fire-resistant interface for the connection and operation of the battery module (BM) in the battery system (BS),
f) the tube (R_{1...n}) is designed and operated such that, at every opening (L), a pressure relief means and a fire-resistant exhaust air device (AK), in particular a chimney, is mounted such that gases emitted by the pressure relief means can be discharged in a controlled manner so as to be conveyed through the exhaust air device (AK),
g) the tube (R_{1...n}), the interface and/or the pressure relief means is designed and/or arranged and operated in such a manner that the battery module (BM) is at least temporarily hermetically sealed by the tube (R_{1...n}), the interface and the pressure relief means,
h) two sheet metal frames (BR) are designed and operated such that, at front and back ends, in order to accommodate the tubes (R_{1...n}), they have cutouts formed according to the tube cross section, the edges of which cutouts are connected to the tubes R_{1...n},
i) the sheet metal frames (BR) for accommodating the battery modules (BM) are designed and operated in such a manner that, between a tube (R_{1...n}) of a battery module (BM) and adjoining surfaces, which are in particular connected to adjacent battery modules (BM) by heat transfer, a multiplicity of air gaps (LS) are formed in such a manner, and are connected and designed and operated in such a manner, that they form a structure which dissipates heat emitted by the battery module (BM) in a controlled manner by a chimney effect, wherein the cutouts and openings (L) are arranged and operated in such a manner that the exhaust air device (AK), in particular between two tubes (R_{1...n}), is operated connected to said tubes,
j) the sheet metal frames (BR) for mounting the battery system are designed to be connectable at least temporarily to a base frame (GR), and operated,
k) a first closure is mounted at the front end of each of the tubes (R_{1...n}) and a second closure is mounted at the back end of each of the tubes (R_{1...n}) so as to be tightly operated with respect to gases produced inside the tubes R_{1...n},
l) at least the tube (R_{1...n}) is connected to the sheet metal frames (BR) and/or the exhaust air device (AK) at least partially based on welding.

## Revendications

1. Armature de système de batterie permettant d'accueillir au moins un premier module de batterie et au moins un deuxième module de batterie (BM) dans un véhicule, de manière préférée dans une salle des machines du véhicule, en particulier d'un véhicule ferroviaire, afin de former un système de batterie, dans laquelle
a) le premier module de batterie et le deuxième module de batterie (BM) peuvent être formés à partir de plusieurs cellules de batterie, en particulier lithium-ion, **caractérisée en ce que**
b) au moins le premier module de batterie peut être agencé dans un tube (R_{1...n}) séparé, en particulier formé de manière rectangulaire à partir de quatre parties latérales individuelles,
c) l'armature de système de batterie comprend le tube et le tube (R_{1...n}) est formé à partir d'un matériau résistant au feu,
d) le tube (R_{1...n}) présente une ouverture (L) formée sur un côté de tube et permettant de fournir un dispositif de protection contre la pression,
e) le tube (R_{1...n}) comprend une interface résistante au feu et destinée au raccordement et au fonctionnement du module de batterie (BM) au sein du système de batterie (BS),
f) le tube (R_{1...n}) est conçu de telle manière qu'un dispositif de protection contre la pression et un dispositif d'évacuation (AK) résistant au feu, en particulier une cheminée, sont installés au niveau de chaque ouverture (L) de telle manière que des gaz émis du côté du dispositif de protection contre la pression peuvent être évacués de manière contrôlée grâce au dispositif d'évacuation (AK),
g) le tube (R_{1...n}), l'interface et/ou le dispositif de protection contre la pression sont conçus et/ou agencés de telle manière que le module de batterie (BM) est fermé hermétiquement de manière au moins temporaire par le tube (R_{1...n}), l'interface et le dispositif de protection contre la pression,
h) deux cadres en tôle (BR) sont conçus de telle manière qu'ils présentent des découpes formées pour accueillir les tubes (R_{1...n}) à l'avant et à l'arrière selon la section transversale de tube et dont les bords sont reliés aux tubes (R_{1...n}),
i) les cadres en tôle (BR) permettant d'accueillir les modules de batterie (BM) sont conçus de telle manière qu'une pluralité d'interstices (LS) sont formés entre le tube (R_{1...n}) d'un module de batterie (BM) et des surfaces adjacentes, en particulier reliées en termes de transfert de chaleur à des modules de batterie (BM) voisins, et sont reliés et conçus de telle manière qu'ils forment une structure qui dissipe de manière contrôlée la chaleur émise du côté du module de batterie (BM) grâce à un effet de cheminée, dans laquelle les découpes et les ouvertures (L) sont agencées de telle manière que le dispositif d'évacuation (AK), en particulier entre deux tubes (R_{1...n}), est raccordé à celles-ci,
j) les cadres en tôle permettant le montage du système de batterie peuvent être reliés au moins temporairement à un cadre de base (GR),
k) un premier bouchon est respectivement fixé sur le côté avant des tubes (R_{1...n}) et un deuxième bouchon est respectivement fixé sur le côté arrière des tubes (R_{1...n}), de manière à être étanche aux gaz générés à l'intérieur des tubes (R_{1...n}),
l) au moins le tube (R_{1...n}) est relié au cadre en tôle (BR) et/ou au dispositif d'évacuation (AK), au moins en partie par des soudures.

2. Armature de système de batterie selon la revendication précédente, **caractérisée en ce qu'**au moins une nervure de renforcement au moins partiellement périphérique est soudée sur le tube (R_{1...n}) autour de la section transversale du tube (R_{1...n}).

3. Armature de système de batterie selon la revendication précédente, **caractérisé en ce que** le tube (R_{1...n}), les nervures de renforcement, les tôles et/ou le dispositif d'évacuation (AK) sont en acier inoxydable.

4. Armature de système de batterie selon l'une quelconque des revendications précédentes, **caractérisée en ce qu'**une isolation thermique (WD), formée de manière préférée à partir d'un matériau isolant bidirectionnel, est agencée dans le tube (R_{1...n}) de telle manière qu'elle est agencée, dans le cas d'un module de batterie agencé dans le tube, entre le module de batterie (BM) et des parois du tube (R_{1...n}) qui la contient.

5. Armature de système de batterie selon la revendication précédente, **caractérisée en ce que** le dispositif de protection contre la pression est relié à l'isolation thermique.

6. Armature de système de batterie selon l'une quelconque des revendications précédentes, **caractérisée en ce que** la protection contre la pression est réalisée sous la forme d'une membrane d'éclatement agencée dans l'ouverture du tube (R_{1...n}) et reliée au tube (R_{1...n}) et/ou au dispositif d'évacuation (AK).

7. Armature de système de batterie selon l'une quelconque des revendications précédentes, **caractérisée en ce que** le dispositif de sécurité contre la pression est réalisé sous la forme d'un disque de rupture.

8. Armature de système de batterie selon l'une quelconque des revendications précédentes, **caractérisée en ce que** le dispositif de sécurité contre la pression est réalisé sous la forme d'au moins un volet de surpression à ressort.

9. Armature de système de batterie selon l'une quelconque des revendications précédentes, **caractérisée en ce qu'**une surface d'étanchéité (DF) est respectivement placée entre les fermetures (D) et les tubes (R_{1...n}) afin de rendre étanche la première et/ou la deuxième fermeture (D).

10. Armature de système de batterie selon l'une quelconque des revendications précédentes, **caractérisée en ce que**, afin d'assurer l'étanchéité, les deuxièmes fermetures (D) sont respectivement soudées à la face arrière des tubes (R_{1...n}) et/ou aux bords des découpes du cadre en tôle (BR).

11. Procédé permettant d'accueillir au moins un premier module de batterie et au moins un deuxième module de batterie (BM) dans un véhicule, de manière préférée dans une salle des machines du véhicule, en particulier d'un véhicule ferroviaire, afin de former un système de batterie, dans lequel
a) le premier module de batterie et le deuxième module de batterie (BM) sont formés et exploités à partir de plusieurs cellules de batterie, en particulier lithium-ion, **caractérisé en ce que**
b) au moins le premier module de batterie est agencé et exploité dans un tube (R_{1...n}) séparé, en particulier formé de manière rectangulaire à partir de quatre parties latérales individuelles,
c) le tube (R_{1...n}) est formé d'un matériau résistant au feu,
d) le tube (R_{1...n}) comprend une ouverture (L) formée dans un côté de tube et permettant de fournir un dispositif de protection contre la pression,
e) le tube (R_{1...n}) comprend une interface résistante au feu et destinée au raccordement et au fonctionnement du module de batterie (BM) au sein du système de batterie (BS),
f) le tube (R_{1...n}) est conçu de telle manière qu'un dispositif de protection contre la pression et un dispositif d'évacuation (AK) résistant au feu, en particulier une cheminée, sont installés au niveau de chaque ouverture (L) de telle manière que des gaz émis du côté du dispositif de protection contre la pression peuvent être évacués de manière contrôlée grâce au dispositif d'évacuation (AK),
g) le tube (R_{1...n}), l'interface et/ou le dispositif de protection contre la pression sont conçus et/ou agencés de telle manière que le module de batterie (BM) est fermé hermétiquement de manière au moins temporaire par le tube (R_{1...n}), l'interface et le dispositif de protection contre la pression,
h) deux cadres en tôle (BR) sont conçus et exploités de telle manière qu'ils présentent des découpes formées pour accueillir les tubes (R_{1...n}) à l'avant et à l'arrière selon la section transversale de tube et dont les bords sont reliés aux tubes (R_{1...n}) ,
i) les cadres en tôle (BR) permettant d'accueillir les modules de batterie (BM) sont conçus et exploités de telle manière qu'une pluralité d'interstices (LS) sont formés entre le tube (R_{1...n}) d'un module de batterie (BM) et des surfaces adjacentes, en particulier reliées en termes de transfert de chaleur à des modules de batterie (BM) voisins, et sont reliés et conçus de telle manière qu'ils forment une structure qui dissipe de manière contrôlée la chaleur émise du côté du module de batterie (BM) grâce à un effet de cheminée, dans lequel les découpes et les ouvertures (L) sont agencées et exploitées de telle manière que le dispositif d'évacuation (AK), en particulier entre deux tubes (R_{1...n}), est exploité en étant raccordé à celles-ci,
j) les cadres en tôle (BR) permettant le montage du système de batterie sont conçus et exploités de manière à pouvoir être reliés au moins temporairement à un cadre de base (GR),
k) un premier bouchon est respectivement fixé sur le côté avant des tubes (R_{1...n}) et un deuxième bouchon est respectivement fixé sur le côté arrière des tubes (R_{1...n}), de manière à être exploité en étant étanche aux gaz générés à l'intérieur des tubes (R_{1...n}), 1) au moins le tube (R_{1...n}) est relié au cadre en tôle (BR) et/ou au dispositif d'évacuation (AK), au moins en partie par des soudures.
